# EUROPÄISCHE PATENTANMELDUNG

(11) **EP 4 582 361 A1**
(43) Veröffentlichungstag der Anmeldung: **09.07.2025**
(21) Anmeldenummer: 24222968.0
(22) Anmeldetag: 23.12.2024
(51) Int. Cl.: B65G 47/84, B65G 54/02, H02K 41/03

(54) **TRANSPORTEINRICHTUNG**

(30) Priorität: 04.01.2024 DE 102024100185
(71) Anmelder: KRONES Aktiengesellschaft, 93073 Neutraubling (DE)
(72) Erfinder: Neubauer, Michael, 93073 Neutraubling (DE); Elsperger, Stefan, 93073 Neutraubling (DE); Davidson, Hartmut, 93073 Neutraubling (DE)
(74) Vertreter: Grünecker Patent- und Rechtsanwälte PartG mbB

(57) **Zusammenfassung**

Eine Transporteinrichtung (1) für eine Komponentenbehandlungsanlage, insbesondere eine Flaschenabfüllanlage, wobei die Transporteinrichtung (1) umfasst:
mindestens zwei Transportelemente (4), die jeweils eine Transportelement-Magnetkrafteinheit (8) und mindestens ein Funktionselement (5) aufweisen, das für einen Transport von Komponenten vorgesehen ist,
eine Lagereinheit (3), die konfiguriert ist, die mindestens zwei Transportelemente (4) nacheinander und unabhängig voneinander entlang einer Transportbahn (B) zu lagern; und
eine entlang der Transportbahn (B) angeordnete Transportbahn-Magnetkrafteinheit (2), die konfiguriert ist, durch Wechselwirkung mit den Transportelement-Magnetkrafteinheiten (8) der mindestens zwei Transportelemente (4) die Transportelemente (4) entlang der Transportbahn (B) anzutreiben,
gekennzeichnet dadurch , dass:
die Transportbahn-Magnetkrafteinheit (2) aus einzelnen Stabmagneten (6) besteht, die auf jeweils separat ansteuerbaren Motoren (7) oder Aktoren (7) gelagert oder von diesen angetrieben sind und durch Bewegung ein wanderndes Magnetfeld generieren, das jedes der mindestens zwei Transportelemente (4) entlang der Transportbahn (B) individuell antreiben kann.

## Beschreibung

### Technisches Gebiet

Die vorliegende Erfindung bezieht sich auf eine Transporteinrichtung in einer Bearbeitungslinie von Vorrichtungen zum Behandeln von Behältnissen und insbesondere von Getränkebehältnissen. Derartige Bearbeitungslinien mit beispielsweise Füllvorrichtungen oder Streckblasvorrichtungen für Kunststoffbehältnisse, Inspektionsvorrichtungen, Transportvorrichtungen, Verpackungsvorrichtungen, Markiervorrichtungen oder Etikettier-Vorrichtungen sind bekannt.

### Stand der Technik

Der Stand der Technik umfasst Transporteinrichtungen, die Behälter auf einer kreisförmigen Transportbahn zwischen Vorrichtungen einer Bearbeitungslinie transportieren. In Bearbeitungslinien kommt es vor, dass einzelne transportierte Behälter fehlerhaft sind, beschädigt werden oder aufgrund von Abnutzung nicht mehr den Anforderungen entsprechen. Derartige Behälter werden durch eine Behältersortiervorrichtung aussortiert und ausgeschleust. Dadurch kommt es zu Lücken innerhalb des Behälterstroms. Es kann in Einzelfällen auch vorkommen, dass Behälter ungewollt die Transportbahn verlassen. Auch dadurch kommt es zu Fehlstellen in der Behälterstrecke. Derartige Fehlstellen wirken sich negativ auf den AnlagenWirkungsgrad aus und müssen durch eine Überleistung anderer Vorrichtungen kompensiert werden.

Aus Patendokument DE10 2017 101 331 ist eine Transporteinrichtung zum Transport von Behältern bekannt. Die Transporteinrichtung weist unabhängig voneinander bewegliche Arme mit Greifern auf, die Behälter greifen und nacheinander auf einer Kreisbahn transportieren. Als zentrales Antriebselement ist hier ein kreisförmiger Langstator-Linear-Motor (LLM) vorgesehen. Im Gegensatz zu einer konventionellen Transporteinrichtung, kann diese Vorrichtung die einzelnen Behälter jeweils mit einer individuellen Geschwindigkeit hintereinander transportieren. So ist es möglich einen Teilungsverzug auszugleichen oder Behälter die, wie durch oben beschriebene Lücken, in unregelmäßigen Abständen auf einem Transportband zugeführt werden, aufzunehmen. Hier synchronisieren sich die einzelnen Arme und bringen die aufgenommenen Behälter während des Transportes von einem Aufnahmepunkt zu einem Abgabepunkt auf den gewünschten Teilungsabstand, um die Behälter dann einer nachfolgenden Maschine (z.B. einem Füller oder einer Etikettier-Vorrichtung) übergeben zu können.

Das Patendokument DE10 2016 224 951 A1 offenbart eine ähnliche Transporteinrichtung, mit einem Stator und zumindest einem Transportkörper, wobei die Transporteinrichtung den Transportkörper in kontrollierter Weise relativ zum Stator befördert, wobei der Stator oder der zumindest eine Transportkörper mehrere beweglich angeordnete Stellmagneten aufweist, die jeweils über ein zentrales Stellelement mit dem Stator bzw. Transportkörper verbunden sind. Das Stellelement ändert eine Position des damit verbundenen Stellmagneten relativ zum Stator in kontrollierter Weise. Der Stator und der Transportkörper sind magnetisch gekoppelt und die Transporteinrichtung befördert den Transportkörper relativ zum Stator durch eine kontrollierte Positionierung der Stellmagneten.

Jedoch sind aus dem genannten Stand der Technik auch Nachteile bekannt. Diese Nachteile sind unter anderem darin zu sehen, dass bekannte Systeme unzuverlässig arbeiten und häufig durch Überlastung ausfallen. Thermische Verluste des zentralen Antriebs erfordern bei höheren Leistungen eine externe Kühlung. Durch den Antrieb von großen Magnetsegmenten kommt es zu hohen Rastmomenten an den Übergängen zu den Permanentmagneten der Transportkörper, was eine gleitende Bewegung der Transportkörper insbesondere bei niedrigen Geschwindigkeiten erschwert. Zudem erschweren große Segmente innerhalb der Transporteinrichtung sowohl die Anpassungsfähigkeit und Umbaumöglichkeiten von Transporteinrichtungen als auch die Zugänglichkeit für Wartung und Säuberung.

### Aufgabe

Der vorliegenden Erfindung liegt daher die Aufgabe zugrunde, eine platzsparende Transporteinrichtung zum individuellen Transport von Komponenten bereitzustellen, die es ermöglicht, Komponenten ressourcenschonend und verlässlich zu transportieren. Die Aufgabe wird erfindungsgemäß durch den Gegenstand von Anspruch 1 gelöst. Ein Verfahren zur Lösung der oben genannten Probleme wird durch das Anzeigeverfahren gemäß Anspruch 14 gelöst. Vorteilhafte Ausführungsformen und Weiterbildungen sind Gegenstand der Unteransprüche.

### Lösung

Eine erfindungsgemäße Transporteinrichtung für eine Komponentenbehandlungsanlage, insbesondere eine Flaschenabfüllanlage umfasst mindestens zwei Transportelemente, die jeweils eine Transportelement-Magnetkrafteinheit und mindestens ein Funktionselement aufweisen, das für einen Transport von Komponenten vorgesehen ist, und eine Lagereinheit, die konfiguriert ist, die mindestens zwei Transportelemente nacheinander und unabhängig voneinander entlang einer Transportbahn zu lagern und eine entlang der Transportbahn angeordnete Transportbahn-Magnetkrafteinheit, die konfiguriert ist, durch Wechselwirkung mit den Transportelement-Magnetkrafteinheiten der mindestens zwei Transportelemente die Transportelemente entlang der Transportbahn anzutreiben, wobei die Transportbahn-Magnetkrafteinheit aus einzelnen Stabmagneten besteht, die auf jeweils separat ansteuerbaren Motoren oder Aktoren gelagert oder von diesen angetrieben sind und durch Bewegung ein wanderndes Magnetfeld generieren, das jedes der mindestens zwei Transportelemente entlang der Transportbahn individuell antreiben kann.

Die erfindungsgemäße Transporteinrichtung stellt als Antriebseinheit der Transportelemente eine Transportbahn-Magnetkrafteinheit bereit, die aus einer Vielzahl einzelner Stabmagnete besteht. Hierdurch ergibt sich der Effekt, dass eine höhere magnetische Flussdichte erreicht und somit eine höhere Leistung erzielt werden kann. Die Verwendung der einzelnen vergleichsweise kleinen Stabmagnete stellt zudem eine Individualisierung und Vereinfachung der Gestaltung der Transfereinrichtung dar, was ein breiteres Einsatzspektrum einer solchen flexiblen Transfereinrichtung ermöglicht. Durch die individuelle Ansteuerung der Motoren oder Aktoren der Stabmagnete kann zudem die Steuerung im Vergleich zum Stand der Technik deutlich vereinfacht werden.

Vorteilhafte Weiterbildungen der Erfindung sind Gegenstände der abhängigen Ansprüche.

Die Transporteinrichtung kann des Weiteren eine Positionserfassungsvorrichtung zur Erfassung der Positionen der mindestens zwei Transportelemente, sowie der Komponenten, umfassen, wobei die Positionserfassungsvorrichtung bevorzugt eine Kamera ist. Die Transporteinrichtung kann zudem eine Steuervorrichtung umfassen, die basierend auf den Ergebnissen der Positionserfassungsvorrichtung die Motoren oder Aktoren separat derart ansteuert, um die mindestens zwei Transportelemente durch die Stabmagneten entlang der Transportbahn anzutreiben, und die Transportelemente mittels Funktionselement zu transportieren. Daraus ergibt sich eine verlässliche Steuerung jedes einzelnen Stabmagnets und somit ein kontrollierter Aufbau des wandernden Magnetfelds. Zudem ergibt sich durch die Erfassung der Positionen der Komponenten deren verlässliche Aufnahme.

Es kann sinnvoll sein, dass die einzelnen Stabmagneten drehbar auf den Motoren oder Aktoren, bevorzugt mit einer Drehachse senkrecht zu einer von der Transportbahn aufgespannten Ebene angeordnet sind. Somit kann eine einfache Änderung des wandernden Magnetfelds durch Rotation der Motoren oder Aktoren garantiert werden. Eine senkrechte Anordnung der Drehachse der Stabmagneten generiert Feldlinien der Magnetfelder, die das wandernde Magnetfeld einfacher kontrollierbar und für den Antrieb der Transportelemente anwendbar macht.

Es kann vorgesehen sein, dass die Transportbahn kreis-, oval- oder mäanderförmig verläuft. Daraus ergibt sich der Effekt, dass die Transporteinrichtung vielseitig und bedarfsgerecht in Bearbeitungslinien einsetzbar ist.

Es kann vorgesehen sein, dass ein Verhältnis der Anzahl von Stabmagneten in der Transportbahn-Magnetkrafteinheit zu der Anzahl von Transportelementen auf der Transportbahn mindestens 2:1, bevorzugt 3:1 ist. Daraus ergibt sich der Effekt, dass ein ausreichend starkes Magnetfeld durch die Stabmagneten aufgebaut wird, um die Transportelement-Magnetkrafteinheit der Transportelemente verlässlich und durchgängig gleitend anzutreiben, insbesondere auch wenn zwei Transportelemente nah beieinander bewegt werden.

Ein weiterer optionaler Aspekt der Erfindung ist, dass die mindestens zwei Transportelemente mit der Lagereinheit kontaktlos an der Transportbahn angeordnet sind. Dies hat den Effekt, dass die Transportelemente ohne Reibungsverluste und störungsfrei auf der Transportbahn bewegt werden können.

Es kann sinnvoll sein, dass die Stabmagnete diametral magnetisierte Stabmagnete sind oder aus einer Welle mit beidseitig aufgebrachten Magneten bestehen. Daraus ergeben sich gleichmäßige Magnetfelder der Stabmagnete mit definierten Feldlinien, welche das wandernde Magnetfeld einfacher kontrollierbar und für den Antrieb der Transportelemente anwendbar machen.

Es kann vorgesehen sein, dass die Transportelement-Magnetkrafteinheit aus einem ferromagnetischen Trägerkörper und mit darauf befestigten Permanentmagneten wechselnder Polung besteht. Derartige Permanentmagneten sind leicht zugänglich und kostengünstig.

Ein weiterer optionaler Aspekt der Erfindung ist, dass die separat ansteuerbaren Motoren oder Aktoren, Elektromotoren, bevorzugt mit einer Geberrückführung, noch bevorzugter Servo-Motoren oder Pneumatikzylinder, sind. Dies begünstigt ein exaktes Antreiben der Stabmagneten, um das wandernde Magnetfeld bedarfsgerecht für den Transport der Transportelemente zu ändern.

Es kann vorgesehen sein, dass die Lagereinheit aus einer zentralen Welle und Armen, bevorzugt mehr als fünf, noch bevorzugter mehr als acht, noch bevorzugter zwölf Arme, besteht, wobei die Arme auf der Welle gelagert sind und die mindestens zwei Transportelemente halten, so dass die Transportelemente nur einen Bewegungs-Freiheitsgrad besitzen. Die Lagereinheit kann ebenfalls ein Schienensystem entlang der Transportbahn sein, das die mindestens zwei Transportelemente, bevorzugt hängend, hält, so dass die Transportelemente nur einen Bewegungs-Freiheitsgrad besitzen. Somit können die Transportelemente lediglich in Richtung der Transportbahn bewegt werden, wodurch Überlagerungen der Magnetfelder und daraus resultierende Magnetkräfte ein Transportelement nicht von der Transportbahn heraus bewegen können.

Ein weiterer optionaler Aspekt der Erfindung ist, dass entlang der Transportbahn nebeneinander angeordnete Stabmagnete in einer unterschiedlichen Höhe, bevorzugt einer von zwei Höhen angeordnet sind oder nebeneinander angeordnete Stabmagnete eine unterschiedliche Länge aufweisen. Hier wird die Höhe der Stabmagnete so gewählt, dass sich zwei benachbarte Stabmagnete nicht mehr direkt gegenüberstehen. Somit sind magnetische Wechselwirkungen untereinander deutlich reduziert, bzw. ausgeschlossen.

Es kann vorgesehen sein, dass das Funktionselement ein Greifer, ein Führungselement, und/oder ein Aufnahmeelement ist, das die Komponenten kraft- oder formschlüssig hält. Dadurch ergibt sich der Effekt, dass die von den Transportelementen gehaltenen Komponenten verlässlich transportiert werden.

Ein weiterer Aspekt der Erfindung ist eine Komponentenbehandlungsanlage umfassend eine Transporteinrichtung gemäß einem der vorangehenden Aspekte, wobei die Transportbahn und die mindestens zwei Transportelemente Teil einer Transporteinrichtung und/oder einer Blasmaschine und/oder einer Ausstattungsmaschine und/oder einer Füllmaschine und/oder einer Inspektionseinheit und/oder einer Markiereinheit und/oder einer Verpackungsmaschine und/oder einer Zuführeinheit für Stückgut wie Vorformlinge oder Verschlüsse sind.

Ein erfindungsgemäßes Transportverfahren für eine Komponentenbehandlungsanlage, insbesondere eine Flaschenabfüllanlage, umfasst, dass mindestens zwei Transportelemente, die jeweils eine Transportelement-Magnetkrafteinheit und mindestens ein Funktionselement aufweisen, das für einen Transport von Komponenten vorgesehen ist und die mindestens zwei Transportelemente, nacheinander und unabhängig voneinander entlang einer Transportbahn mittels einer entlang der Transportbahn angeordneten Transportbahn-Magnetkrafteinheit transportiert werden, indem die Transportelement-Magnetkrafteinheit des jeweiligen Transportelements und die Transportbahn-Magnetkrafteinheit magnetisch zusammenzuwirken, wobei jedes Transportelement mit einer Lagereinheit gelagert wird, wobei die Transportbahn-Magnetkrafteinheit aus einzelnen Stabmagneten besteht, die auf jeweils separat ansteuerbaren Motoren oder Aktoren gelagert oder von diesen angetrieben sind und ein wanderndes Magnetfeld generieren, das jedes der mindestens zwei Transportelemente entlang der Transportbahn individuell antreibt.

Weitere bevorzugte Weiterbildungen der Erfindung ergeben sich durch Kombinationen der Merkmale, die in der Beschreibung, den Ansprüchen und den Figuren offenbart sind.

### Kurze Beschreibung der Figuren

Es zeigen:
Fig. 1A eine perspektivische Ansicht einer Transporteinrichtung gemäß einer ersten Ausführungsform.
Fig. 1B eine perspektivische Ansicht eines Ausschnitts einer Transportbahn-Magnetkrafteinheit gemäß der ersten Ausführungsform.
Fig. 2A eine perspektivische Ansicht eines Stabmagnets.
Fig. 2B eine Draufsicht auf in einer Transportbahn angeordneter Stabmagnete in Wechselwirkung mit Transportelement-Magnetkrafteinheiten.
Fig. 3 eine perspektivische Ansicht einer Transportbahn-Magnetkrafteinheit gemäß einer zweiten Ausführungsform.
Fig. 4 eine perspektivische Ansicht von einer Transportbahn-Magnetkrafteinheit gemäß einer dritten Ausführungsform.

### Detaillierte Beschreibung der Erfindung

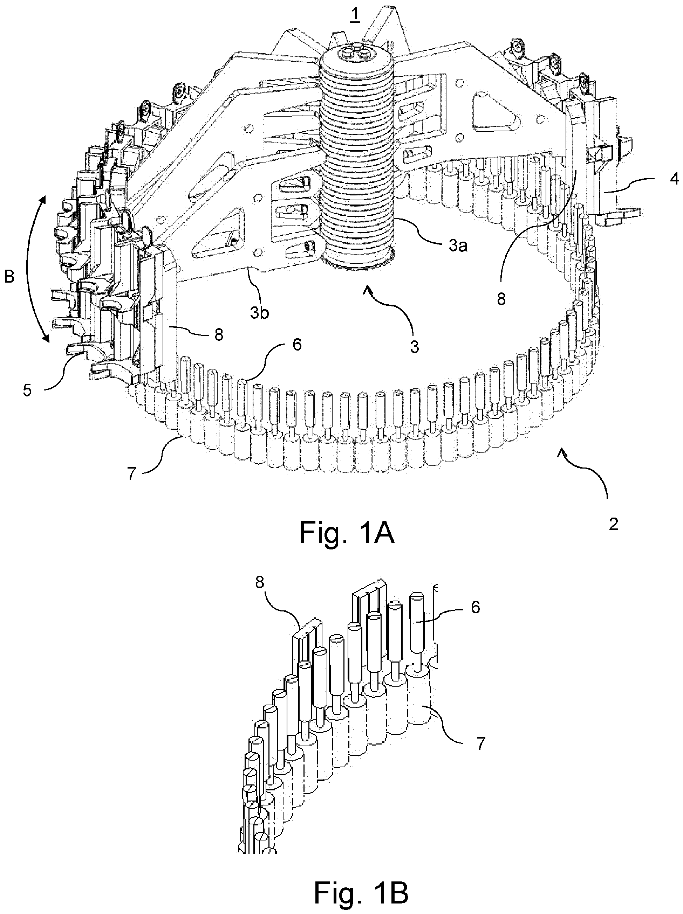

Fig. 1A zeigt eine perspektivische Ansicht einer Transporteinrichtung 1 gemäß einer ersten Ausführungsform. Die Transporteinrichtung 1 ist beispielsweise Teil einer Bearbeitungslinie aus Vorrichtungen zum Behandeln von Komponenten wie Behältnissen und insbesondere von Getränkebehältnissen. Im Folgenden wird von einer Komponente in Form eines Behälters ausgegangen. Komponenten können jedoch auch Verschlüsse wie Schraubverschlüsse, Kronkorken oder Deckel, Vorformlinge für einen (Streck-) Blasprozess zum Herstellen von Behältern wie Flaschen und Getränkedosen sowie Verpackungen und dergleichen sein.

Die Gesamtheit der Bearbeitungslinie ist modular aufgebaut und setzt sich zusammen aus Transporteinrichtungen, Blasformvorrichtungen, Füllvorrichtungen, Inspektionsvorrichtungen, Ausstattungsmaschinen, Verpackungsvorrichtungen, Markierungsvorrichtungen, Etikettier-Vorrichtungen und dergleichen, die Bearbeitungsschritte an Behältnissen durchführen. Auch mobile Versorgungsvorrichtungen können an die Bearbeitungslinie angebaut werden. Durch Umrüstarbeiten kann die Bearbeitungslinie bedarfsgerecht umgebaut werden, so dass die Bearbeitungslinie Behältnisse aus unterschiedlichem Material in verschiedenen Größen und Stückzahlen bearbeiten kann.

Fig. 1A zeigt die Transporteinrichtung 1 als einen flexiblen Transferstern, der eine Lagereinheit 3 aufweist, die aus einer zentralen Welle 3a mit einer senkrechten Achse und radial nach außen verlaufenden Armen 3b besteht. Die Arme 3b sind derart auf der Welle 3a gelagert, dass sie sich um die zentrale Welle 3a nacheinander und voreinander unabhängig bewegen können. Die Arme 3b sind beispielsweise Profile, die teilweise Aussparungen aufweisen und radial nach außen spitz zulaufen. Somit können das Gewicht der Arme 3b und somit Lagerkräfte in der zentrale Welle 3a reduziert werden. Am radialen Ende jedes Arms 3b ist ein Transportelement 4 angeordnet. Durch die Lagerung der Arme 3b in der Lagereinheit 3 können die Transportelemente 4 am radialen Ende jedes Arms 3b auf einer kreisförmigen Transportbahn B bewegt werden. Fig. 1A zeigt die Lagereinheit 3 mit acht Armen 3b. Bevorzugt weist eine Lagereinheit 3 mehr als fünf und bis zu zwölf Arme 3b auf.

Jedes der Transportelemente 4, weist an dessen radial nach außen liegender Seite ein Funktionselement 5, in Form eines Greifers auf, das einen Behälter, beispielsweise eine Flasche, greift. Dabei kann das Funktionselement 5 einen Greifmechanismus aufweisen, der einen Behälter aktiv greift. Das Funktionselement 5 kann jedoch auch als ein Führungselement und/oder als ein Aufnahmeelement gestaltet sein, welches den Behälter kraft- und/oder formschlüssig hält. Beispielsweise kann ein Behälter gegen eine in radialer Richtung außen um die Transportbahn B verlaufende Führungsschiene gepresst werden, um somit durch das Funktionselement 5 gehalten zu werden.

Jedes der Transportelemente 4, weist an dessen radial innenliegender Seite eine Transportelement-Magnetkrafteinheit 8 auf. Die Transportelement-Magnetkrafteinheit 8 besteht vorzugsweise aus einem ferromagnetischen Trägerkörper und mit darauf befestigten Permanentmagneten.

Die Gesamtheit aus Transportelement 4 mit Funktionselement 5 ist jeweils derart am Ende eines jeden Arms 3b starr befestigt, dass die Transportelemente 4 lediglich einen Bewegungs-Freiheitsgrad besitzen, der eine Bewegung entlang der Transportbahn B durch Drehung der Arme 3b um die Welle 3a zulässt. Dabei ist eine beidseitige Bewegung in Richtung der Transportbahn B möglich. Außerdem ist das Transportelement 4 derart am Ende eines jeden Arms 3b befestigt, dass das Transportelement 4, in senkrechter Richtung L-förmig nach unten über einen unteren Abschnitt des Arms 3b übersteht.

Fig. 1A zeigt unterhalb der Lagereinheit 3 eine Transportbahn-Magnetkrafteinheit 2. Die Transportbahn-Magnetkrafteinheit 2 ist eine kreisförmige innerhalb der Transportbahn B liegende Anordnung aus Stabmagneten 6 die drehbar auf Motoren 7 oder Aktoren 7 befestigt sind. Die einzelnen Stabmagneten 6 und die Motoren 7 bzw. Aktoren 7 weisen eine gemeinsame Drehachse auf, die zu einer von der Transportbahn B aufgespannten Ebene senkrecht steht. Die Stabmagneten 6 sind derart in einer Höhe und in einem Kreis mit Radius angeordnet, so dass ein Magnetfeld der Stabmagneten 6 mit einem Magnetfeld der Transportelement-Magnetkrafteinheiten 8 in magnetische Wechselwirkung treten kann. Der Mittelpunkt des Kreises, auf dem die Stabmagneten 6 angeordnet ist, fällt mit dem Mittelpunkt der zentralen Welle 3a zusammen.

Fig. 1B zeigt eine perspektivische Ansicht eines Ausschnitts einer Transportbahn-Magnetkrafteinheit 2 gemäß der ersten Ausführungsform. Zwei Transportelement-Magnetkrafteinheiten 8 sind der Einfachheit halber ohne das angrenzende Transportelement 4 und das Funktionselement 5 dargestellt. Die Transportelement-Magnetkrafteinheiten 8 umkreisen auf der Transportbahn B den Kreis aus Stabmagneten 6. Die Transportelemente 4 sind derart um die Stabmagnete 6 durch die Lagereinheit 3 gelagert, dass kein Kontakt zwischen den Stabmagneten 6 und den Transportelement-Magnetkrafteinheiten 8 besteht. Die Rotation der Stabmagneten 6 kann auf elektrische, pneumatische, hydraulische Art, oder dergleichen erfolgen.

Es ist auch denkbar, dass die Stabmagnete 6 linear in radiale Richtung bezogen auf die Transportbahn B bewegt werden. Somit wird durch unterschiedlichen Abstand von benachbarten Stabmagneten 6 zur Transportbahn B die Distanz zu den vorbeifahrenden Transportelement-Magnetkrafteinheiten 8 variiert. Durch eine entsprechende Veränderung der Distanzen der Stabmagnete 6 wird eine Vortriebskraft auf die Transportelement-Magnetkrafteinheiten 8 erzeugt. Die lineare Bewegung der Stabmagnete 6 kann beispielsweise elektrisch, hydraulisch oder pneumatisch erzeugt werden.

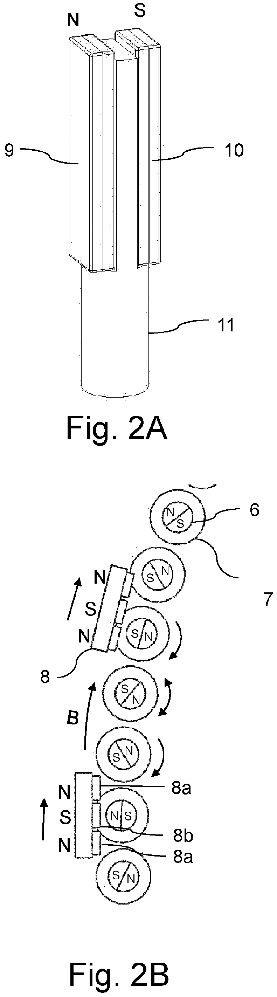

Fig. 2A zeigt eine perspektivische Ansicht eines Stabmagnets 6. Der Stabmagnet 6 besteht aus einer runden Welle 11. An der oberen Seite der Welle 11 sind beidseitig Magnete 9, 10 aufgebracht. Hierbei weist beim Magnet 9 die positive Polung (N) nach außen. Bei dem Magnet 9 gegenüberliegenden Magnet 10 weist die negative Polung (S) nach außen. Die Welle 11 ist dazu geeignet auf einem Motor 7 befestigt zu werden. Die Stabmagnete 6 können auch ein diametral magnetisierter Stabmagnet 6 sein, der auf einen Motor 7 aufgesetzt werden kann. Die Motoren 7 bzw. Aktoren 7 sind separat ansteuerbare Motoren 7. Es kann sich dabei um Elektromotoren, Motoren mit einer Geberrückführung, Servo-Motoren oder Pneumatikzylinder handeln.

Fig. 2B zeigt eine Draufsicht auf eine Reihe in Transportbahn B angeordneter Stabmagnete 6 in Wechselwirkung mit zwei Transportelement-Magnetkrafteinheiten 8. Die Transportelement-Magnetkrafteinheiten 8 werden durch die Stabmagnete 6 angetrieben und entlang der Transportbahn B, in Fig. 2B von unten nach oben, bewegt. Die Stabmagnete 6 werden durch die separat ansteuerbaren Motoren 7 oder Aktoren 7 angetrieben. Die Stabmagnete 6 drehen sich um ihre eigene Achse und sind entweder mit deren positiver Polung (N) oder deren negativer Polung (S) in Richtung der Transportelement-Magnetkrafteinheit 8 orientiert. Die Ausdehnung der Transportelement-Magnetkrafteinheit 8 ist so gewählt, dass die gesamte Länge des magnetischen Abschnitts des Stabmagneten 6 beim Vorbeiführen überdeckt wird.

Die Stabmagnete 6 können auch durch Aktoren 7, wie beispielsweise Pneumatikzylinder angetrieben und bewegt werden. Dabei sind die Stabmagnete 6 auf den Aktoren 7 gelagert. Die Stabmagnete 6 müssen dabei nicht direkt auf den Aktoren 7 lagern. Die Lagerung kann auch durch separate Maschinenelemente (nicht dargestellt) gewährleistet werden.

Die Transportelement-Magnetkrafteinheit 8 weist an deren ferromagnetischem Trägerkörper Permanentmagneten wechselnder Polung 8a, 8b (N-S-N) auf. Durch Gegenüberstellung von einer positiven Polung (N) des Stabmagnets 6 und einer negativen Polung 8b der Transportelement-Magnetkrafteinheit 8 ergibt sich eine Anziehungskraft, welche die Transportelement-Magnetkrafteinheit 8 mit dem Stabmagnet 6 zusammenführt. Durch Gegenüberstellung einer negativen Polung (S) des Stabmagnets 6 und der negativen Polung 8b der Transportelement-Magnetkrafteinheit 8 ergibt eine Abstoßkraft, welche die Transportelement-Magnetkrafteinheit 8 von dem Stabmagnet 6 wegdrückt. Durch Gegenüberstellung von einer negativen Polung (S) des Stabmagnets 6 und einer positiven Polung 8a der Transportelement-Magnetkrafteinheit 8 ergibt sich eine Anziehungskraft, welche die Transportelement-Magnetkrafteinheit 8 mit dem Stabmagnet 6 zusammenführt. Durch Gegenüberstellung einer positiven Polung (N) des Stabmagnets 6 und der positiven Polung 8a der Transportelement-Magnetkrafteinheit 8 ergibt eine Abstoßkraft, welche die Transportelement-Magnetkrafteinheit 8 von dem Stabmagnet 6 wegdrückt.

Durch Drehung der Motoren 7 und damit einhergehender Drehung der Stabmagnete 6 können die Magnetfelder derart überlagert werden, dass die Transportelement-Magnetkrafteinheit 8 entlang der Transportbahn B bewegt wird. Die Wechselwirkung aus Anziehung und Abstoßung durch die rotierenden Stabmagnete 6 führt zum Antreiben der Transportelement-Magnetkrafteinheit 8 entlang der Transportbahn B. Die Drehung der Stabmagnete 6 durch die Motoren 7 ist in Fig. 2B durch Pfeile dargestellt. Es ist möglich, dass sich einzelne Stabmagnete 6 (mittig dargestellt), nicht stetig in eine Drehrichtung drehen, sondern kurzzeitig die Drehrichtung wechseln. Dies bietet die Möglichkeit, dass die benötigte Polungsseite des Stabmagnets 6 rechtzeitig zur Verfügung steht, um eine Transportelement-Magnetkrafteinheit 8 anzuziehen bzw. abzustoßen.

In Fig. 2B sind zwei Transportelement-Magnetkrafteinheiten 8 und sieben Stabmagnete 6 gezeigt. Damit zwischen den Transportelementen 4 ausreichend Platz für das individuelle Bewegen der Transportelemente 4 bleibt, sind vorzugsweise doppelt so viele Stabmagnete 6 wie Transportelemente 4 im Vollkreis der Transportbahn B angeordnet. Das Verhältnis der Anzahl von Stabmagnete 6 in der Transportbahn-Magnetkrafteinheit 2 zu der Anzahl von Transportelementen 4 auf der Transportbahn B ist also mindestens 2:1. Bevorzugt kann das Verhältnis auch 3:1 sein. Es ist jedoch auch denkbar, dass die Anzahl der Stabmagnete 6 deutlich größer als die Anzahl der Transportelemente 4. Somit ergibt sich ausreichend Bewegungsspielraum zwischen den Transportelementen 4. Dies erlaubt ein Aufschließen der Transportelemente 4 zueinander oder ein Entfernen der Transportelemente 4 voneinander, um beispielsweise das Ausgleichen von Fehlstellen innerhalb einer Reihe von transportierten Behältern auszugleichen.

Neben der in Fig. 2B gezeigten Anordnung der Transportelement-Magnetkrafteinheiten 8 (N - S - N) ist es auch denkbar, dass bei allen Magneten einer Transportelement-Magnetkrafteinheit 8 ein und derselbe Pol nach innen zu den Stabmagneten 6 zeigt (z.B. N - N - N, oder S - S - S). Es ist auch denkbar, dass die Magnetausrichtung mit jeder Transportelement-Magnetkrafteinheit 8 wechselt, also erste Transportelement-Magnetkrafteinheit 8 mit einer Polung N - N - N, zweite Transportelement-Magnetkrafteinheit 8 mit einer Polung S - S - S, dritte Transportelement-Magnetkrafteinheit 8 mit einer Polung N - N - N, usw. Außerdem ist es auch denkbar, dass die Transportelement-Magnetkrafteinheiten 8 eine geradzahlige Anzahl von Magneten besitzen, also beispielsweise eine Polung N - S - N - S, oder S - N - S - N. Grundsätzlich sollten die Magnete auf den Transportelement-Magnetkrafteinheiten 8 so angebracht sein, dass mit den Stabmagneten 6 möglichst geeignete Anziehungs- und Abstoßungskräfte erzeugt werden können, die dazu geeignet sind, die gewünschte Bewegung der Transportelement-Magnetkrafteinheiten 8 zu erzeugen.

Die Transporteinrichtung 1 umfasst eine Positionserfassungsvorrichtung (nicht dargestellt) zur Erfassung der Positionen der Transportelemente 4. Die Positionserfassungsvorrichtung ist bevorzugt eine hochauflösende Kamera. Die Positionserfassungsvorrichtung kann auch bei hohen Drehzahlen der Transportelemente 4, die Transportelemente 4 mit deren Transportelement-Magnetkrafteinheiten 8 erfassen. Zudem kann die Positionserfassungsvorrichtung erkennen, ob das Funktionselement 5 eines Transportelements 4 einen Behälter führt oder nicht.

Zudem kann eine Positionserfassungsvorrichtung zum Einsatz kommen, die sich oberhalb der Stabmagnete um die gesamte Transporteinrichtung 1 erstreckt. Ein solche Positionserfassungsvorrichtung ist in der Lage präzise die Positionen der in geringer Entfernung vorbeigeführten Transportelemente 4 zu detektieren. Zu diesem Zweck ist es vorteilhaft, wenn die Transportelement-Magnetkrafteinheiten 8 der Transportelemente 4 über die Stabmagnete 6 hinausragen. Alternativ können auch andersartige Positionserfassungssysteme zum Einsatz kommen. So ist es auch denkbar, dass zusätzliche Objekte auf den Armen 3b angebracht werden, die von einer Sensoreinheit detektiert werden können, so dass Rückschlüsse auf die aktuelle Position der Transportelemente 4 gezogen werden können.

Die Transporteinrichtung 1 umfasst zudem eine Steuervorrichtung (nicht dargestellt), die mit der Positionserfassungsvorrichtung bevorzugt kabellos verbunden ist. Basierend auf den Ergebnissen der Positionserfassungsvorrichtung steuert die Steuervorrichtung die Motoren 7 individuell an, dass die Magnetfelder der Stabmagnete 6 derart mit den Magnetfeldern der Transportelement-Magnetkrafteinheiten 8 wechselwirken, dass die Transportelemente 4 entlang der Transportbahn B angetrieben werden. Dabei wird jedes einzelne Transportelement 4 durch die Positionserfassungsvorrichtung durchgängig erfasst. Entsprechend dem Transportelement 4 gegenüberliegende Stabmagnete 6 werden durch individuelle Steuerung der dazugehörigen Motoren 7 derart gedreht, dass eine gleitende Führung des Transportelements 4 entlang der Transportbahn B bereitgestellt wird. Somit können die Transportelemente 4 entlang der Transportbahn B individuell angetrieben werden. Die Steuervorrichtung ist zudem dazu konfiguriert die Bewegungsrichtung der Transportelemente 4 entlang der Transportbahn B und deren Geschwindigkeit zu steuern.

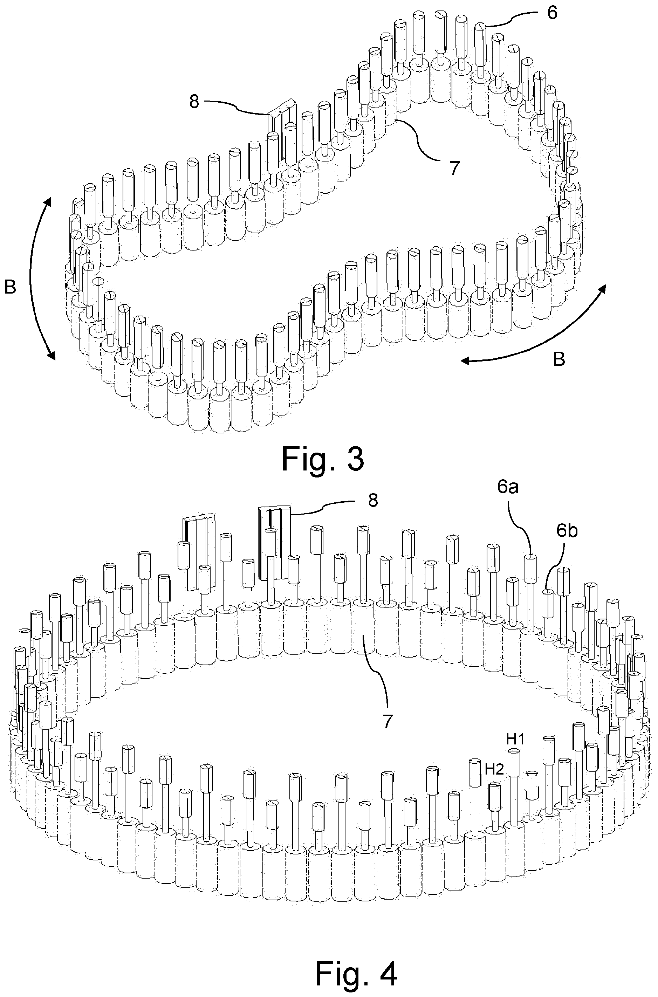

Fig. 3 zeigt eine perspektivische Ansicht einer Transportbahn-Magnetkrafteinheit 2 gemäß einer zweiten Ausführungsform. Fig. 3 ist auf die Darstellung der Transportbahn-Magnetkrafteinheit 2 beschränkt. Die Transportbahn B ist mäanderförmig angeordnet. Die Anordnung der Stabmagnete 6 bildet einen abgeschlossenen Mäander. Die Transportelement-Magnetkrafteinheiten 8 werden, wie in Fig. 3 dargestellt, weiterhin durch die Anordnung der Stabmagneten 6 außen umlaufend auf der Transportbahn B angetrieben. Die Funktionsweise des Antriebs der Transportelemente 4 geschieht analog wie oben beschrieben. Durch die Mäanderform der Transporteinrichtung 1 kann garantiert werden, dass komplexe Anforderungen an Behältertransportbahnen B in einer Bearbeitungslinie bedarfsgerecht gelöst werden können.

In der zweiten Ausführungsform ist die Lagereinheit 3 derart gestaltet, dass die Transportelemente 4 auf der mäanderförmigen Transportbahn B geführt werden. Dies geschieht beispielsweise durch ein Schienensystem entlang der Transportbahn B, das die Transportelemente 4, bevorzugt hängend, hält, so dass die Transportelemente 4 nur einen Bewegungs-Freiheitsgrad entlang der Transportbahn B besitzen. Weiterhin ist denkbar, dass die Lagereinheit 3 derart gestaltet ist, dass diese wie in der ersten Ausführungsform eine zentrale Welle 3a aufweist und die Arme 3b jeweils mindestens einen Teleskopmechanismus aufweisen, durch den die Länge des Arms 3b variiert werden kann. Auch Kombinationslösungen aus einem Schienensystem und der Lagereinheit 3 mit Teleskoparmen ist denkbar. Es ist zudem denkbar, dass die Transportbahn B eine ovale Form oder eine andere unregelmäßige Form oder dergleichen aufweist. Neben einer Anordnung einer kreisrunden, ovalen oder mäanderförmigen Transportbahn B sind demnach beliebige weitere Konturen wie z.B. Geraden, Kurven, etc. oder auch eine beliebige Kombination aus diesen denkbar, die keine in sich geschlossene Transportbahn B darstellen. Somit können auch Transportbahnen B mit Kurvenverläufen realisiert werden, die auf spezielle Anwendungsfälle zugeschnitten sind (z.B. Teilungsverzugsstern).

Fig. 4 zeigt eine perspektivische Ansicht von einer Transportbahn-Magnetkrafteinheit 2 gemäß einer dritten Ausführungsform. Fig. 4 ist auf die Darstellung der Transportbahn-Magnetkrafteinheit 2 beschränkt und zeigt zwei Transportelement-Magnetkrafteinheiten 8 und eine Vielzahl von Stabmagneten 6, die auf einer kreisförmigen Transportbahn B angeordnet sind. Wie in Fig. 4 dargestellt, sind entlang der Transportbahn B nebeneinander angeordnete Stabmagnete 6a, 6b wechselnd in unterschiedlichen Höhen H1, H2 angeordnet. Bevorzugt sind die Höhen so gewählt, dass sich die gesamten magnetischen Abschnitte der Stabmagneten 6 in der Breitenrichtung nicht überschneiden. Die Ausdehnung der Transportelement-Magnetkrafteinheit 8 ist so gewählt, dass die gesamte Ausdehnung des magnetischen Abschnitts der Stabmagnete 6a, 6b beim Vorbeiführen überdeckt wird. Durch die unterschiedlichen Höhen H1, H2 der nebeneinander angeordneten Stabmagnete 6a, 6b sind magnetische Wechselwirkungen der Stabmagnete 6 untereinander deutlich reduziert, bzw. ausgeschlossen. Somit kann eine gleitende Führung der Transportelemente 4 entlang der Transportbahn B weiter verbessert werden.

Die vorliegende Erfindung ist nicht auf die beschriebenen Ausführungsbeispiele beschränkt. Weitere Abänderungen und Variationen der Ausführungsbeispiele sind denkbar. So wäre es möglich, dass die Transportelemente 4 die Transportelement-Magnetkrafteinheit 8 statt an der Rückseite, an deren Unterseite aufweisen. Dies ermöglicht einen kompakteren Bau der Befestigung der Transportelemente 4 an den Armen 3b.

Außerdem ist denkbar, dass mehr als eine Reihe an Transportelementen 4 übereinander parallel entlang einer Transportbahn B transportiert werden. Hierfür werden, ähnlich wie in Fig. 4 dargestellt zwei Reihen an Stabmagnete 6 in verschiedenen Höhen angeordnet, wobei jeder Reihe jeweils Transportelemente 4 in der jeweiligen Höhe gegenüber angeordnet werden.

Neben der Kombination von gleichartigen Stabmagneten 6 mit Motoren 7 und Transportelement-Magnetkrafteinheiten 8 ist auch eine Kombination aus herkömmlichen (z. B. spulenbasierten) Langstator-Linearmotormodulen und der erfindungsgemäßen Transporteinrichtung denkbar. Somit könnte z.B. eine Transportbahn B realisiert werden, bei der ein Teil aus Langstator-Linearmotormodulen besteht (z.B. in Bereichen mit speziellen Anforderungen hinsichtlich Genauigkeit, Vortriebskraft, etc.) und ein anderer Teil aus der erfindungsgemäßen Transporteinrichtung.

Zudem ist denkbar, dass die Lagereinheit 3 derart gestaltet ist, dass Transportelemente 4 aneinander vorbeigeführt werden können. Dies kann durch die Nutzung von Hebe- und Teleskopmechanismen in den Armen 3b realisiert werden. Durch gezielt gesteuerte Neutralisation der Magnetkräfte können Transportelemente 4 an einer Position in der Transportbahn B radial herausbewegt werden, damit diese von anderen Transportelementen 4 überholt werden können. Dies ermöglicht das Aussortieren von fehlerhaften Behältern innerhalb der Transporteinheit 1.

Zudem ist denkbar, dass die Transporteinrichtung 1 mehrere Aufnahme-, Abgabe- und Übergabepositionen aufweist, die entlang der Transportbahn B angeordnet sein können. Dabei können stromauf- oder stromabwärtige Vorrichtungen, die Behälter übergeben bzw. aufnehmen, tangential oder radial an die Transportbahn B angebaut sein. Dies ermöglicht ein zeitgleiches Aufnehmen bzw. Weitergeben der Behälter.

Es ist zudem denkbar, dass die transportierten Behälter Gebinde aus mehreren Behältern sind, die durch die Transporteinrichtung 1 transportiert werden.

Die beschriebene Transporteinrichtung 1 ist nicht darauf beschränkt in einer Behälterbehandlungsanlage angewendet zu werden. Es sind auch weitere Anwendungsfälle in Montagelinien, Verpackungslinien und dergleichen denkbar.

Obwohl die Erfindung in Bezug auf spezifische Ausführungsformen für eine vollständige und klare Offenbarung beschrieben wurde, sind die beigefügten Ansprüche nicht auf diese Weise zu beschränken, sondern so auszulegen, dass sie alle Modifikationen und alternative Konstruktionen verkörpern, die einem Fachmann auf adäquate Weise einfallen können, welche in den Schutzbereich der Ansprüche fallen. Zusätzlich können die Merkmale verschiedener Implementierungsausführungsformen kombiniert werden, um weitere Ausführungsformen der Erfindung zu bilden.

### Bezugszeichenliste

- 1:: Transporteinrichtung;
- 2:: Transportbahn-Magnetkrafteinheit
- 3:: Lagereinheit;
- 3a:: Mittelsäule
- 3b:: Arme
- 4:: Transportelement;
- 5:: Funktionselement;
- 6:: Stabmagnet;
- 7:: Motor, Aktor;
- 8:: Transportelement-Magnetkrafteinheit;
- 8a: Permanentmagnet (positive Polung);
- 8b: Permanentmagnet (negative Polung);
- 9:: Magnet (positive Polung);
- 10:: Magnet (negative Polung);
- 11:: Welle

## Patentansprüche

1. Eine Transporteinrichtung (1) für eine Komponentenbehandlungsanlage, insbesondere eine Flaschenabfüllanlage, wobei die Transporteinrichtung (1) umfasst:
mindestens zwei Transportelemente (4), die jeweils eine Transportelement-Magnetkrafteinheit (8) und mindestens ein Funktionselement (5) aufweisen, das für einen Transport von Komponenten vorgesehen ist,
eine Lagereinheit (3), die konfiguriert ist, die mindestens zwei Transportelemente (4) nacheinander und unabhängig voneinander entlang einer Transportbahn (B) zu lagern; und
eine entlang der Transportbahn (B) angeordnete Transportbahn-Magnetkrafteinheit (2), die konfiguriert ist, durch Wechselwirkung mit den Transportelement-Magnetkrafteinheiten (8) der mindestens zwei Transportelemente (4) die Transportelemente (4) entlang der Transportbahn (B) anzutreiben,
**gekennzeichnet dadurch, dass:**
die Transportbahn-Magnetkrafteinheit (2) aus einzelnen Stabmagneten (6) besteht, die auf jeweils separat ansteuerbaren Motoren (7) oder Aktoren (7) gelagert oder von diesen angetrieben sind und durch Bewegung ein wanderndes Magnetfeld generieren, das jedes der mindestens zwei Transportelemente (4) entlang der Transportbahn (B) individuell antreiben kann.

2. Die Transporteinrichtung (1) gemäß dem vorangehenden Anspruch, **dadurch gekennzeichnet, dass** die Transporteinrichtung (1) des Weiteren umfasst:
eine Positionserfassungsvorrichtung zur Erfassung der Positionen der mindestens zwei Transportelemente (4), sowie der Komponenten, wobei die Positionserfassungsvorrichtung bevorzugt eine Kamera ist;
eine Steuervorrichtung, die konfiguriert ist, basierend auf den Ergebnissen der Positionserfassungsvorrichtung die Motoren (7) oder Aktoren (7) separat derart anzusteuern, um die mindestens zwei Transportelemente (4) durch die Stabmagnete (6) entlang der Transportbahn (B) anzutreiben.

3. Die Transporteinrichtung (1) gemäß einem der vorangehenden Ansprüche, **dadurch gekennzeichnet, dass** die einzelnen Stabmagnete (6) drehbar auf den Motoren (7) oder Aktoren (7), bevorzugt mit einer Drehachse senkrecht zu einer von der Transportbahn (B) aufgespannten Ebene angeordnet sind.

4. Die Transporteinrichtung (1) gemäß einem der vorangehenden Ansprüche, **dadurch gekennzeichnet, dass** die Transportbahn (B) kreis-, oval- oder mäanderförmig verläuft.

5. Die Transporteinrichtung (1) gemäß einem der vorangehenden Ansprüche, **dadurch gekennzeichnet, dass** ein Verhältnis der Anzahl von Stabmagneten (6) in der Transportbahn-Magnetkrafteinheit (2) zu der Anzahl von Transportelementen (4) auf der Transportbahn (B) mindestens 2:1, bevorzugt 3:1 ist.

6. Die Transporteinrichtung (1) gemäß einem der vorangehenden Ansprüche, **dadurch gekennzeichnet, dass** die mindestens zwei Transportelemente (4) mit der Lagereinheit (3) kontaktlos an der Transportbahn (B) angeordnet sind.

7. Die Transporteinrichtung (1) gemäß einem der vorangehenden Ansprüche, **dadurch gekennzeichnet, dass** die Stabmagnete (6) diametral magnetisierte Stabmagnete sind oder aus einer Welle (11) mit beidseitig aufgebrachten Magneten (9, 10) bestehen.

8. Die Transporteinrichtung (1) gemäß einem der vorangehenden Ansprüche, **dadurch gekennzeichnet, dass** die Transportelement-Magnetkrafteinheit (8) aus einem ferromagnetischen Trägerkörper (8) und mit darauf befestigten Permanentmagneten wechselnder Polung (8a, 8b) besteht.

9. Die Transporteinrichtung (1) gemäß einem der vorangehenden Ansprüche, **dadurch gekennzeichnet, dass** die separat ansteuerbaren Motoren (7) oder Aktoren (7), Elektromotoren, bevorzugt mit einer Geberrückführung, noch bevorzugter Servo-Motoren oder Pneumatikzylinder sind.

10. Die Transporteinrichtung (1) gemäß einem der vorangehenden Ansprüche, **dadurch gekennzeichnet, dass**
die Lagereinheit (3) aus einer zentralen Welle (3a) und Armen (3b), bevorzugt mehr als fünf, noch bevorzugter mehr als acht, noch bevorzugter zwölf Arme (3b), besteht, wobei die Arme (3b) auf der Welle (3a) gelagert sind und die mindestens zwei Transportelemente (4) halten, so dass die Transportelemente (4) nur einen Bewegungs-Freiheitsgrad besitzen, oder
die Lagereinheit (3) ein Schienensystem entlang der Transportbahn (B) ist, das die mindestens zwei Transportelemente (4), bevorzugt hängend, hält, so dass die Transportelemente (4) nur einen Bewegungs-Freiheitsgrad besitzen.

11. Die Transporteinrichtung (1) gemäß einem der vorangehenden Ansprüche, **dadurch gekennzeichnet, dass** entlang der Transportbahn (B) nebeneinander angeordnete Stabmagnete (6) in einer unterschiedlichen Höhe, bevorzugt einer von zwei Höhen (H1, H2) angeordnet sind, oder
nebeneinander angeordnete Stabmagnete (6) eine unterschiedliche Länge aufweisen.

12. Die Transporteinrichtung (1) gemäß einem der vorangehenden Ansprüche, **dadurch gekennzeichnet, dass** das Funktionselement (5) ein Greifer, ein Führungselement, und/oder ein Aufnahmeelement ist, das die Komponenten kraft- oder formschlüssig hält.

13. Eine Komponentenbehandlungsanlage umfassend eine Transporteinrichtung (1) gemäß einem der vorangehenden Ansprüche, wobei die Transportbahn (B) und die mindestens zwei Transportelemente (4) Teil einer Transporteinrichtung (1) und/oder einer Blasmaschine und/oder einer Ausstattungsmaschine und/oder einer Füllmaschine und/oder einer Inspektionseinheit und/oder einer Markiereinheit und/oder einer Verpackungsmaschine und/oder einer Zuführeinheit für Stückgut wie Vorformlinge oder Verschlüsse sind.

14. Ein Verfahren zum Transport von Transportelementen (4) in einer Komponentenbehandlungsanlage zum Behandeln von Komponenten, umfassend mindestens zwei Transportelemente (4), die jeweils eine Transportelement-Magnetkrafteinheit (8) und mindestens ein Funktionselement (5) aufweisen, das für einen Transport von Komponenten vorgesehen ist und die mindestens zwei Transportelemente (4), nacheinander und unabhängig voneinander entlang einer Transportbahn (B) mittels einer entlang der Transportbahn (B) angeordneten Transportbahn-Magnetkrafteinheit (2) transportiert werden, indem die Transportelement-Magnetkrafteinheit (8) des jeweiligen Transportelements (4) und die Transportbahn-Magnetkrafteinheit (2) magnetisch zusammenzuwirken, wobei jedes Transportelement (4) mit einer Lagereinheit (3) gelagert wird
**gekennzeichnet dadurch, dass:**
die Transportbahn-Magnetkrafteinheit (2) aus einzelnen Stabmagneten (6) besteht die auf jeweils separat ansteuerbaren Motoren (7) oder Aktoren (7) gelagert oder durch diese angetrieben sind und ein wanderndes Magnetfeld generieren, das jedes der mindestens zwei Transportelemente (4) entlang der Transportbahn (B) individuell antreiben kann.
